# EUROPÄISCHE PATENTSCHRIFT

(11) **EP 1 459 421 B1**
(45) Veröffentlichungstag und Bekanntmachung des Hinweises auf die Patenterteilung: **11.05.2005**
(21) Anmeldenummer: 02793072.6
(22) Anmeldetag: 18.12.2002
(51) Int. Cl.: H02G 11/02

(54) **KABELROLLE MIT FREQUENZUMFORMEREINRICHTUNG**
CABLE ROLLER WITH A FREQUENCY CONVERTER DEVICE
ROULEAU DE CABLE DOTE D'UN DISPOSITIF CONVERTISSEUR DE FREQUENCE

(30) Priorität: 28.12.2001 DE 10164304
(43) Veröffentlichungstag der Anmeldung: 22.09.2004
(73) Patentinhaber: Wacker Construction Equipment AG, 80809 München (DE)
(72) Erfinder: STEFFEN, Michael, 80796 München (DE)
(74) Vertreter: Hoffmann, Jörg Peter, Dr. Ing.
(86) Internationale Anmeldenummer: PCT/EP2002/014498
(87) Internationale Veröffentlichungsnummer: WO 2003/056675

(56) Entgegenhaltungen:
- DE-C- 19 722 107

## Beschreibung

Die Erfindung betrifft eine Kabelrolle gemäß dem Oberbegriff des Patentanspruchs 1.

Auf Baustellen werden häufig zur Betonverdichtung Innenvibratoren eingesetzt, deren Asynchronmotoren mit einer Sonderspannung und einer Sonderfrequenz versorgt werden müssen. Soll zum Beispiel ein in dem Innenvibrator vorhandener Asynchronmotor mit einer angeschlossenen Unwucht eine Drehzahl von 12.000 U/min erreichen, ist bei einer 2-poligen Maschine eine Anregungsfrequenz von 200 Hz erforderlich. Das öffentliche Netz stellt jedoch lediglich eine Frequenz von 50 Hz zur Verfügung.

Aus diesem Grund wurden in der Vergangenheit Frequenzumformer eingesetzt, die meist mit Drehstrom versorgt wurden und aufgrund ihres hohen Gewichts sehr schwer zu handhaben waren. Bald wurde es möglich, durch Bereitstellung von entsprechender Leistungselektronik mit geeigneten Halbleitern den Frequenzumformer zu miniaturisieren und auf diese Weise sein Gewicht von bespielsweise 60 kg auf 4 kg zu reduzieren. Ein derartiger leichter Frequenzumformer wurde aber weiterhin zwischen das Endgerät und einer zur Überbrückung größerer Entfernungen notwendige Kabeltrommel geschaltet. Bei der Bewegung des Endgerätes, bespielsweise des Innenvibrators, zu verschiedenen Arbeitsstellen mussten daher der Frequenzumformer und zusätzlich die Kabeltrommel bewegt werden.

Aus der DE 197 22 107 C1 ist eine Kabelrolle gemäß dem Oberbegriff des Patentanspruchs 1 bekannt, in die ein Frequenzumformer integriert ist, so dass die Kabelrolle und der Frequenzumformer als Einheit bewegt werden können.

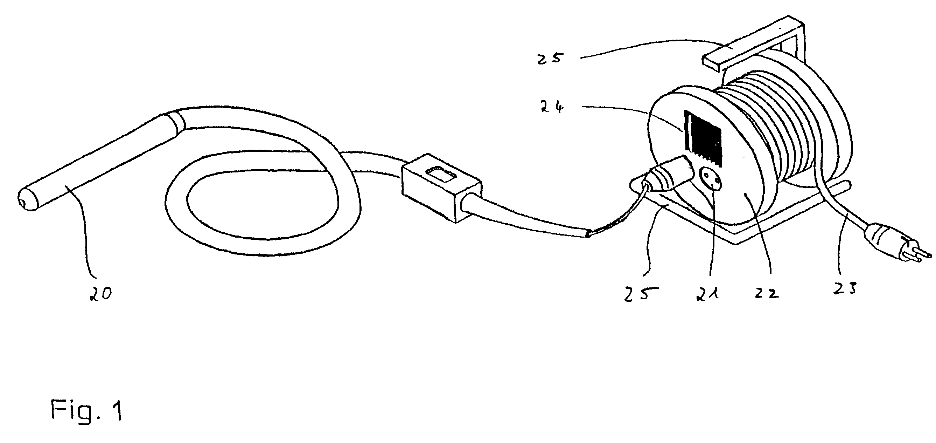

Fig.1 zeigt eine derartige Anordnung mit einem Netzkabel 23, das auf einer Trommel 22 aufgewickelt ist, wobei die Trommel 22 von einem Gestell 25 getragen wird. In die Trommel 22 integriert ist ein Frequenzumformer 24, der wenigstens eine Steckdose 21 mit einer elektrischen Sonderfrequenz versorgt. An der Steckdose 21 ist ein bekannter Innenvibrator 20 mit einem Asynchronmotor angeschlossen. Solch eine Kombination von Kabeltrommel und Frequenzumformer hat aber den Nachteil, dass sich die Steckdosen 21 beim Auf- oder Abwickeln des Kabels mit der Trommel mitdrehen. Dadurch kann das Zuleitungskabel für den Innenvibrator 20 verdreht werden.

Der Erfindung liegt die Aufgabe zugrunde, eine Kabelrolle mit einer Frequenz-umformereinrichtung anzugeben, bei der die Handhabbarkeit eines Baustellengeräts in Verbindung mit der Kombination Kabelrolle und Frequenzumformereinrichtung verbessert, insbesondere das Kabelaufwicklungssystem optimiert wird.

Die erfindungsgemäße Lösung der Aufgabe ist in Patentanspruch 1 definiert. Vorteilhafte Ausgestaltungen der Erfindung sind den Unteransprüchen zu entnehmen.

Das Zusammenführen von Frequenzumformereinrichtung und Kabelrolle wird erfindungsgemäß dadurch bewerkstelligt, dass die Frequenzumformereinrichtung im wesentlichen ortsfest an dem Rahmen der Kabelrolle angebracht ist. Dabei trägt der Rahmen die Frequenzumformereinrichtung, die Frequenzumformereinrichtung kann aber auch umgekehrt den Rahmen tragen. Ein Vorteil dabei ist die wesentlich geringere träge Masse der Trommel, was das Auf- oder Abwickeln des Netzkabels erleichtert.

An der Kabelrolle ist wenigstens eine von der Frequenzumformereinrichtung gespeiste Steckdose vorgesehen. Die elektrische Verbindung zwischen der Frequenzumformereinrichtung und dem Netzkabel wird durch wenigstens zwei Schleifringeinrichtungen bewerkstelligt. Vorteil dieser elektrischen Verbindung ist, dass wenigstens eine der Steckdosen beim Auf- bzw. Abwickeln des Netzkabels im wesentlichen ortsfest sein kann, das heißt, dass sich die Steckdose nicht mitdreht, was eine verbesserte Handhabung der an der Kabelrolle angesteckten Geräte zur Folge hat, da man diese beim Kabelaufoder -abwickeln nicht mehr abstecken muß, um ein Verdrillen der Zuleitung zu vermeiden.

Da die Frequenzumformereinrichtung aus mehreren Frequenzumformern bestehen kann, sind die Steckdosen und somit Baustellengeräte mit unterschiedlichen Sonderfrequenzen versorgbar.

Von Vorteil ist auch, wenn Bauteile, aus denen die verschiedenen Frequenzumformer bestehen, in der Frequenzumformereinrichtung zusammengefasst werden können. Das bedeutet, dass mehrere Frequenzumformer aus den selben Bauteilen oder Bauteilgruppen bestehen können. Diese Ausführungsmöglichkeit spart Platz und kann dadurch ergänzt werden, dass je nach Ausführungsart die Trommel, auf der das Netzkabel aufgewickelt ist, die einen oder mehrere Frequenzumformer umfassende Frequenzumformereinrichtung umgibt und wenigstens einen Teil eines Gehäuses der Frequenzumformereinrichtung bildet, oder umgekehrt die Frequenzumformereinrichtung die Trommel umgibt und somit einen Teil eines Gehäuses der Trommel bildet.

Zum besseren Schutz oder zur verbesserten Kühlung kann die Frequenzumformereinrichtung oder die Trommel dabei von einer zusätzlichen Gehäusewand umgeben sein, die sich zwischen der Frequenzumformereinrichtung und der Trommel befindet, wobei sich Luft zur Kühlung in einem Zwischenraum zwischen der Gehäusewand und der Frequenzumformereinrichtung oder der Trommel befindet.

Von Vorteil ist es, die Frequenzumformereinrichtung derart mit der Trommel zu kombinieren, dass eine möglichst gute Kühlung des Systems bewerkstelligt werden kann. Die Kühlung kann dabei durch gezieltes Anbringen von Luftschlitzen oder Kühlkörpern am Rahmen oder an der Frequenzumformereinrichtung oder auch an der Trommel bewerkstelligt werden. Auch ist die Integration von Lüftern oder speziellen Kühlflüssigkeiten in die Kabelrolle möglich.

Als eine besondere Ausführungsform der elektrischen Verbindung zwischen Frequenzumformereinrichtung und Netzkabel ist auch eine Kopplung wenigstens zweier Induktivitäten oder wenigstens eines Kondensators denkbar. Dadurch sind Möglichkeiten gegeben, eventuell auftretende Abnutzungserscheinungen an der Schleifringeinrichtung zu umgehen.

Das Auf- oder Abwickeln des Netzkabels wird üblicherweise manuell bewerkstelligt. Bei einer besonders vorteilhaften Ausführungsform der Erfindung wickelt sich das Kabel durch Drehen der Trommel automatisch auf. Dazu kann das bekannte Prinzip der Kabelaufwicklung bei Staubsaugern verwendet werden.

Nachfolgend wird die Erfindung anhand vo Beispielen unter Zuhilfenahme der begleitenden Figuren näher erläutert. Es zeigen:
**Fig. 1** eine bekannte Anordnung mit einer Kabelrolle mit integriertem Frequenzumformer und einem angeschlossenen Innenvibrator;
**Fig. 2** eine seitliche Schnittdarstellung einer ersten Ausführungsform der erfindungsgemäßen Kabelrolle;
**Fig. 3** eine seitliche Schnittdarstellung einer zweiten Ausführungsform der erfindungsgemäßen Kabelrolle;
**Fig. 4** eine Frontansicht in Schnittdarstellung einer dritten Ausführungsform der Kabelrolle ähnlich der Fig. 3 mit einer Frequenzumformereinrichtung mit zwei Frequenzumformern;
**Fig. 5** eine Frontansicht in Schnittdarstellung einer vierten Ausführungsform der Kabelrolle ähnlich der Fig. 3 mit einer Frequenzumformereinrichtung mit mehreren Frequenzumformern.
**Fig. 6** eine Seitenansicht einer fünften Ausführungsform der erfindungsgemäßen Kabelrolle;
**Fig. 7** einen Ausschnitt A aus der Seitenansicht von Fig. 3 und Fig. 6.

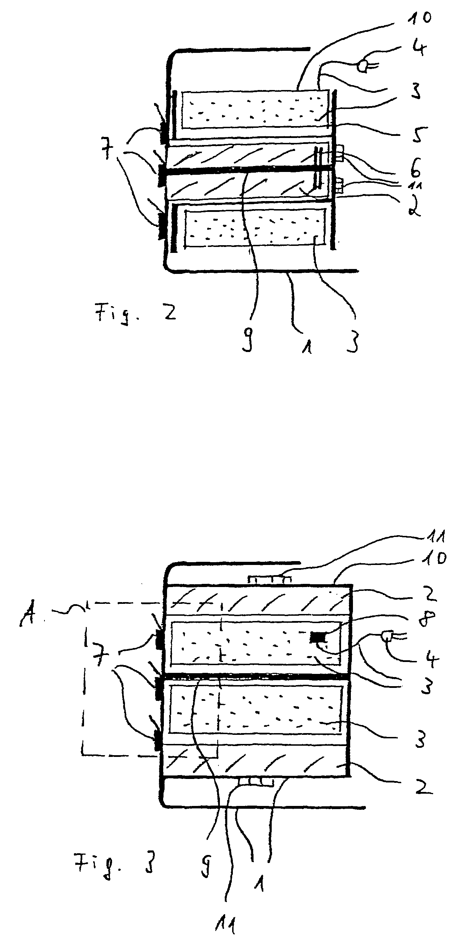

Fig. 2 zeigt in seitlicher Schnittdarstellung eine erste Ausführungsform der erfindungsgemäßen Kabelrolle, mit einer mit einem Rahmen 1 im wesentlichen ortsfest verbundenen Frequenzumformereinrichtung 2. Eine Trommel 5 ist um die Frequenzumformereinrichtung 2 angeordnet und drehbar um eine Achse 9 gelagert. Auf der Trommel 5 ist ein Netzkabel 3 aufgewickelt, das mit der Frequenzumformereinrichtung 2 über wenigstens zwei Schleifringeinrichtungen 6 elektrisch verbunden ist.

Bei diesem Ausführungsbeispiel kann die Trommel 5 wenigstens einen Teil des Gehäuses der Frequenzumformereinrichtung 2 bilden. Dabei ist die Fequenz-Umformereinrichtung 2 von der Trommel 5 schützend umgeben. Es ist aber auch denkbar und entsprechend in Fig. 2 dargestellt, dass die Frequenzumformereinrichtung 2 von einem eigenen Gehäuse umgeben ist, wobei sich Luft zwischen dem Gehäuse und der Trommel 5 befindet, um die Kühlung der Frequenz-umformereinrichtung 2 zu verbessern.

Der Netzanschluß erfolgt über einen am Ende des Netzkabels 3 vorgesehenen Netzstecker 4. Die Schleifringeinrichtungen 6, über die die elektrische Verbindung zwischen Frequenzumformereinrichtung 2 und dem Netzkabel 3 hergestellt ist, sitzen auf der Drehachse 9. Es ist aber auch denkbar, dass die Schleifringeinrichtungen 6 mit der Frequenzumformereinrichtung 2 fest verbunden sind und sich die Drehachse 9 zentrisch in den Schleifringeinrichtungen 6 dreht. Die Frequenzumformereinrichtung 2 versorgt die am Rahmen 1 befestigten Steckdosen 7 mit mindestens einer Sonderfrequenz, das heißt es sind auch Steckdosen denkbar, die unterschiedliche Sonderfrequenzen liefern.

Fig. 3 zeigt die Seitenansicht einer zweiten Ausführungsform der erfindungsgemäßen Kabelrolle mit der mit dem Rahmen 1 im wesentlichen ortsfest verbundenen Frequenzumformereinrichtung 2. Bei diesem Ausführungsbeispiel bildet die Frequenzumformereinrichtung 2 wenigstens einen Teil des Gehäuses der Kabelrolle. Von der Frequenzumformereinrichtung 2 ist die Trommel 5 umschlossen, auf der das Netzkabel 3 aufgewickelt ist, welches über eine die Frequenzumformereinrichtung 2 durchdringende Kabelführung 8 nach außen geführt ist.

Der Netzanschluß erfolgt wieder über den Netzstecker 4. Die Trommel 5 sitzt auf der Drehachse 9 und ist um diese frei drehbar. Je nach Ausführungsform der Kabelrolle kann das Kabel 3 über die Trommel 5 automatisch, z.B. gemäß dem bekannten Prinzip der Kabelaufwicklung bei Staubsaugern, aufgewickelt werden. Der dafür erforderliche, im Prinzip bekannte Mechanismus ist in Fig. 3 nicht gezeigt. Die Verbindung zwischen Frequenzumformereinrichtung 2 und dem Kabel 3 erfolgt wieder über eine nicht dargestellte zwei Schleifringeinrichtung. Für die Steckdosen 7 und die Verbindung zwischen dem Netzkabel 3 und der Frequenzumformereinrichtung 2 gilt selbes, wie zu Fig. 2.

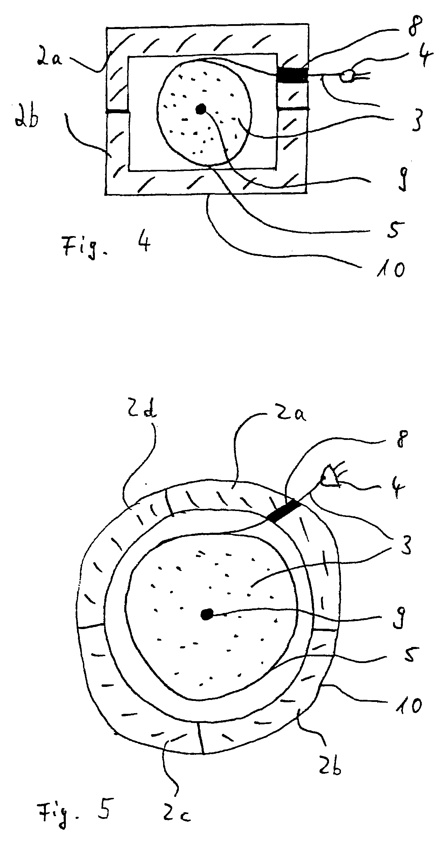

Fig. 4 zeigt im Schnitt die Frontansicht einer dritten Ausführungsform der Kabelrolle ähnlich der Fig. 3. Hierbei soll verdeutlicht werden, dass die Frequenzumformereinrichtung 2 aus zwei Frequenzumformern 2a, 2b bestehen kann, die unterschiedliche Sonderfrequenzen liefern.

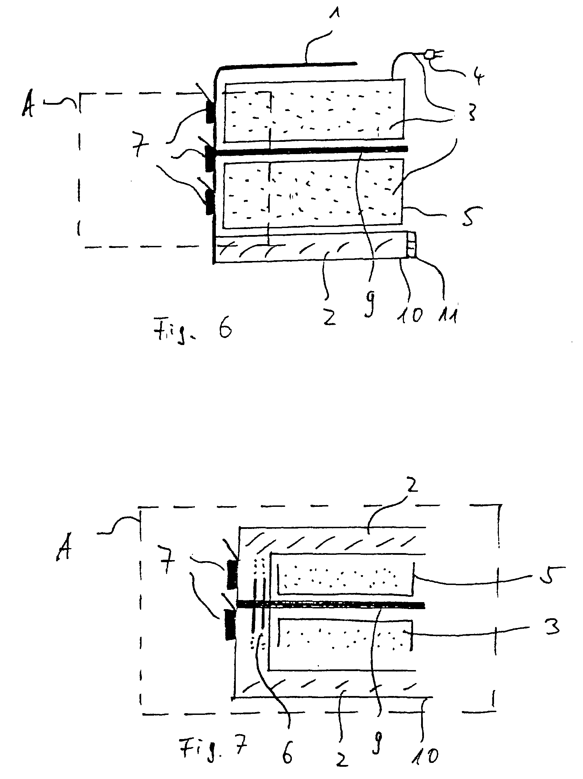

Fig. 5 zeigt im Schnitt eine Frontansicht einer vierten Ausführungsform der Kabelrolle entsprechend der Fig. 3. Hierbei sind jedoch mehrere Frequenzumformer 2a, 2b, 2c, 2d ringförmig angeordnet.

Fig. 6 zeigt die Seitenansicht einer fünften Ausführungsform der erfindungsgemäßen Kabelrolle mit einer mit dem Rahmen 1 im wesentlichen ortsfest verbundenen Frequenzumformereinrichtung 2, die hierbei aber als Bodenplatte den Rahmen 1 und den Rest der Kabelrolle trägt. Die Trommel 5 ist wieder auf der Drehachse 9 drehbar gelagert. Die Drehachse 9 ist mit dem Rahmen 1 fest verbunden. Für die Steckdosen 7 und die Verbindung zwischen Netzkabel 3 und Frequenzumformereinrichtung 2 gilt das in Zusammenhang mit Fig. 2 beschriebene.

In Fig. 7 wird eine Variante zu der Ausführungsform gemäß Fig. 3 gezeigt. Nach Fig. 7 sind zwei Schleifringeinrichtungen 6 vorgesehen, über die der elektrische Strom von dem auf der Trommel 5 aufgewickelten Netzkabel 3 zu der Frequenz-umformereinrichtung 2 und schließlich zu den Steckdosen 7 übertragen werden kann. Die an verschiedenen Stellen anordenbaren Schleifringeinrichtungen 6 dienen zur Stromübertragung von einem drehenden Teil (in Fig. 7: Trommel 5 mit Netzkabel 3) zu einem feststehenden Teil (Frequenzumformereinrichtung 2 oder/und Rahmen 1).

Alternativ zu den Schleifringeinrichtungen kann der elektrische Strom auch über entsprechend angeordnete Induktivitäten oder gar mit Hilfe einer Kondensatoranordnung übertragen werden. Dies hängt allerdings von der übertragbaren Leistung ab.

## Patentansprüche

1. Kabelrolle, mit
- einem Rahmen (1),
- einer an dem Rahmen (1) befestigten Frequenzumformereinrichtung (2) für elektrischen Wechselstrom, die eine Eingangsfrequenz eines Netzstromes in mindestens eine Ausgangsfrequenz eines Sonderstromes umwandelt,
- einem die Frequenzumformereinrichtung (2) mit dem Netzstrom versorgenden Netzkabel (3), das mit der Frequenzumformereinrichtung (2) elektrisch verbunden ist,
- einer relativ zu dem Rahmen (1) drehbar gelagerten Trommel (5), auf der das Netzkabel (3) aufwickelbar ist,
**dadurch gekennzeichnet, dass** die Frequenzumformereinrichtung (2) im wesentlichen ortsfest an dem Rahmen (1) angebracht ist.

2. Kabelrolle nach Anspruch 1, **dadurch gekennzeichnet, dass** wenigstens eine von der Frequenzumformereinrichtung (2) gespeiste Steckdose (7) vorgesehen ist.

3. Kabelrolle nach einem der Ansprüche 1 oder 2, **dadurch gekennzeichnet, dass** die Trommel (5) die Frequenzumformereinrichtung (2) umgibt und wenigstens einen Teil eines Gehäuses der Frequenzumformereinrichtung (2) bildet.

4. Kabelrolle nach einem der Ansprüche 1 oder 2 **dadurch gekennzeichnet, dass** die Frequenzumformereinrichtung (2) die Trommel (5) umgibt und wenigstens einen Teil eines Gehäuses der Trommel (5) bildet.

5. Kabelrolle nach einem der Ansprüche 3 oder 4, **dadurch gekennzeichnet, dass** die Frequenzumformereinrichtung (2) wenigstens teilweise von einer Gehäusewand (10), die sich zwischen der Frequenzumformereinrichtung (2) und der Trommel (5) befindet, umgeben ist, wobei sich Luft zur Kühlung in einem Zwischenraum zwischen der Gehäusewand (10) und der Trommel (5) befindet.

6. Kabelrolle nach einem der Ansprüche 3 oder 4, **dadurch gekennzeichnet, dass** die Trommel (5) wenigstens teilweise von einer Gehäusewand (10), die sich zwischen der Frequenzumformereinrichtung (2) und der Trommel (5) befindet, umgeben ist, wobei sich Luft zur Kühlung in einem Zwischenraum zwischen der Gehäusewand (10) und der Frequenzumformereinrichtung (2) befindet.

7. Kabelrolle nach einem der Ansprüche 1 bis 6, **dadurch gekennzeichnet, dass** die elektrische Verbindung zwischen der Frequenzumformereinrichtung (2) und dem Netzkabel (3) über'wenigstens zwei Schleifringeinrichtungen (6) realisiert ist.

8. Kabelrolle nach einem der Ansprüche 1 bis 7, **dadurch gekennzeichnet, dass** eine Kühleinrichtung (11) zur Kühlung der Frequenzumformereinrichtung (2) vorgesehen ist.

9. Kabelrolle nach einem der Ansprüche 1 bis 8, **dadurch gekennzeichnet, dass** die Frequenzumformereinrichtung (2) einen oder mehrere Frequenzumformer aufweist.

10. Kabelrolle nach einem der Ansprüche 1 bis 9, **dadurch gekennzeichnet, dass** wenigstens eine der Steckdosen (7) beim Drehen der Trommel ortsfest ist.

11. Kabelrolle nach einem der Ansprüche 1 bis 10, **dadurch gekennzeichnet, dass** der Rahmen (1) als Gestell zum Tragen der Trommel (5) ausgebildet ist.

## Claims

1. Cable roller having
- a frame (1),
- a frequency converter device (2) for electrical alternating current which is attached to the frame (1) and converts an input frequency of a mains current into at least one output frequency of a special current,
- a mains cable (3) which supplies the frequency converter device (2) with the mains current and is electrically connected to the frequency converter device (2),
- a drum (5) which is mounted so as to rotate relative to the frame (1) and on which the mains cable (3) can be wound,
**characterised in that** the frequency converter device (2) is attached to the frame (1) in a substantially stationary manner.

2. Cable roller as claimed in claim 1, **characterised in that** at least one socket (7) supplied by the frequency converter device (2) is provided.

3. Cable roller as claimed in any one of claims 1 or 2, **characterised in that** the drum (5) surrounds the frequency converter device (2) and forms at least a part of a housing of the frequency converter device (2).

4. Cable roller as claimed in any one of claims 1 or 2, **characterised in that** the frequency converter device (2) surrounds the drum (5) and forms at least a part of a housing of the drum (5).

5. Cable roller as claimed in any one of claims 3 or 4, **characterised in that** the frequency converter device (2) is surrounded at least partially by a housing wall (10), which is located between the frequency converter device (2) and the drum (5), wherein air for cooling purposes is located in an intermediate space between the housing wall (10) and the drum (5).

6. Cable roller as claimed in any one of claims 3 or 4, **characterised in that** the drum (5) is surrounded at least partially by a housing wall (10), which is located between the frequency converter device (2) and the drum (5), wherein air for cooling purposes is located in an intermediate space between the housing wall (10) and the frequency converter device (2).

7. Cable roller as claimed in any one of claims 1 to 6, **characterised in that** the electrical connection between the frequency converter device (2) and the mains cable (3) is produced by at least two slip ring devices (6).

8. Cable roller as claimed in any one of claims 1 to 7, **characterised in that** a cooling device (11) for cooling the frequency converter device (2) is provided.

9. Cable roller as claimed in any one of claims 1 to 8, **characterised in that** the frequency converter device (2) has one or a plurality of frequency converters.

10. Cable roller as claimed in any one of claims 1 to 9, **characterised in that** at least one of the sockets (7) is stationary during rotation of the drum.

11. Cable roller as claimed in any one of claims 1 to 10, **characterised in that** the frame (1) is formed as a stand for carrying the drum (5).

## Revendications

1. Enrouleur de câble comportant
- un cadre (1)
- un dispositif de transformation de fréquence (2) fixé au cadre (1) pour un courant électrique alternatif qui transforme une fréquence d'entrée d'un courant secteur en au moins une fréquence de sortie d'un courant spécial,
- un câble secteur (3) alimentant le dispositif de transformation de fréquence (2) en courant secteur, lequel câble est relié électriquement au dispositif de transformation de fréquence (2),
- un tambour (5) monté tournant par rapport au cadre (1) sur lequel peut être enroulé le câble secteur (3),
**caractérisé en ce que** le dispositif de transformation de fréquence (2) est placé sensiblement en un emplacement fixe sur le cadre (1).

2. Enrouleur de câble selon la revendication 1, **caractérisé en ce qu'**il est prévu au moins une prise femelle (7) alimentée par le dispositif de transformation de fréquence (2).

3. Enrouleur de câble selon l'une des revendications 1 ou 2, **caractérisé en ce que** le tambour (2) entoure le dispositif de transformation de fréquence (2) et forme au moins au moins une partie d'un boîtier du dispositif de transformation de fréquence (2).

4. Enrouleur de câble selon l'une des revendications 1 ou 2, **caractérisé en ce que** le dispositif de transformation de fréquence (2) entoure le tambour (5) et forme au moins une partie d'un boîtier du tambour (5).

5. Enrouleur de câble selon l'une des revendications 3 ou 4, **caractérisé en ce que** le dispositif de transformation de fréquence (2) est entouré au moins partiellement par une paroi (10) du boîtier qui se trouve entre le dispositif de transformation de fréquence (2) et le tambour (5), de l'air de refroidissement se trouvant dans un interstice entre la paroi (10) du boîtier et le tambour (5).

6. Enrouleur de câble selon l'une des revendications 3 ou 4, **caractérisé en ce que** le tambour (5) est entouré au moins en partie par une paroi (10) du boîtier qui se trouve entre le dispositif de transformation de fréquence (2) et le tambour (5), de l'air de refroidissement se trouvant dans un interstice entre la paroi (10) du boîtier et le dispositif de transformation de fréquence (2).

7. Enrouleur de câble selon l'une des revendications 1 à 6, **caractérisé en ce que** la liaison électrique entre le dispositif de transformation de fréquence (2) et le câble secteur (3) est réalisée par au moins deux dispositifs à bagues collectrices (6).

8. Enrouleur de câble selon l'une des revendications 1 à 7, **caractérisé en ce qu'**il est prévu un dispositif de refroidissement (11) pour refroidir le dispositif de transformation de fréquence (2).

9. Enrouleur de câble selon l'une des revendications 1 à 8, **caractérisé en ce que** le dispositif de transformation de fréquence (2) comporte un ou plusieurs convertisseurs de fréquence.

10. Enrouleur de câble selon l'une des revendications 1 à 9, **caractérisé en ce qu'**au moins l'une des prises femelles (7) est fixe lors de la rotation du tambour.

11. Enrouleur de câble selon l'une des revendications 1 à 10, **caractérisé en ce que** le cadre (1) est réalisé comme bâti pour supporter le tambour (5).
